# EUROPÄISCHE PATENTSCHRIFT

(11) **EP 0 984 587 B1**
(45) Veröffentlichungstag und Bekanntmachung des Hinweises auf die Patenterteilung: **11.04.2007**
(21) Anmeldenummer: 99113833.0
(22) Anmeldetag: 15.07.1999
(51) Int. Cl.: H04L 12/28, H01R 9/24, H02J 13/00

(54) **Anschlusseinrichtung für die Gebäudesystemtechnik**
Connection device for a domestic communication system
Dispositif de raccordement pour réseau domestique

(30) Priorität: 18.07.1998 DE 19832398
(43) Veröffentlichungstag der Anmeldung: 08.03.2000
(73) Patentinhaber: Merten GmbH & Co. KG, 51674 Wiehl (DE)
(72) Erfinder: Ludolf Wilhelm, 72622 Nürtingen (DE)
(74) Vertreter: Selting, Günther

(56) Entgegenhaltungen:
- EP-A- 0 263 276
- EP-A- 0 436 804
- EP-A- 0 771 049
- EP-A- 0 841 775

## Beschreibung

Die Erfindung bezieht sich auf eine Anschlußeinrichtung für die Gebäudesystemtechnik zum Anschließen von Geräten an einen Informationsbus.

Die EP-PS 0 344 609 B1 beschreibt ein digitales Signalübertragungssystem für die Hausleittechnik, bei dem Datentelegramme zwischen verschiedenen im Gebäude installierten Anschlußeinrichtungen übertragen werden können. Die Datenübertragung erfolgt zum Zwecke des Schaltens, Steuerns, Regelns, Messens und/oder Überwachens, wobei die Anschlußeinheiten die Funktion von Eingabe- und/oder Ausgabeeinheiten haben können. An die Anschlußeinheiten können externe elektrische Geräte, Melder oder Funktionsgeber angeschlossen werden. Die Anschlußeinheiten ermöglichen die Kommunikation von externen Geräten mit dem Hausleitsystem. Da für unterschiedliche externe Geräte funktionsspezifische Anschlußeinheiten benötigt werden, ist zur Vereinheitlichung des in dem Gebäude zu installierenden Systems vorgesehen, daß jede Anschlußeinrichtung aus einer Universalschnittstelle und einem Geräteadapter (Ein-/Ausgabeteil) besteht. Die Universalschnittstellen sind hardwaremäßig untereinander gleich aufgebaut, so daß bei der Installation des Systems an jeder Anschlußseite zunächst nur eine Universalschnittstelle, die einen Mikroprozessor enthält, zu installieren ist.

Die Universalschnittstelle wird mit dem funktionsspezifischen Geräteadapter verbunden, der die Anschlußeinrichtung komplettiert und ihr dasjenige Verhalten vermittelt, das für die Kommunikation mit einem bestimmten externen Gerätetyp erforderlich ist.

Durch die EP 0 365 696 B1 ist ein Übertragungssystem zur Ankopplung von Sende- und Empfangsstationen an einem Zweileiter-Bus bekannt, der mit Gleichstrom arbeitet. Die Information wird als Wechselspannung überlagert, wobei zur Ankopplung von mehreren Stationen an den Bus und zum Aus- bzw. Einkoppeln von Nachrichten, jeweils eine Ankopplungseinrichtung vorgesehen ist, die eine Ankopplungsschaltung aufweist.

Es sind ferner Informationsübertragungssysteme für die Hausleittechnik bekannt (beispielsweise DE 28 32 942 A1), mit denen die Übertragung von Informationen über das Stromversorgungsnetz eines Gebäudes erfolgt. Bei dieser Lösung ist eine Ankopplungseinrichtung mit einer Ankopplungsschaltung erforderlich, die sich von der vorgenannten unterscheidet.

Bussysteme, die einen optischen Übertragungsweg benutzen, beispielsweise eine Infrarotübertragungsstrecke, haben wieder eine andere Ankopplungsschaltung.

Das gilt auch für ein Ultraschall-Bussystem ebenso, wie für einen Informationsbus mit einem Funkübertragungsweg.

Nachteilig bei den vorstehend beschriebenen Systemen ist, daß die Anschlußeinrichtungen eines Bussystems nur für die Ankopplung an ein bestimmtes Übertragungsmedium, wie Zweidraht-Leitung, oder Power-Net, oder Licht oder Funk ausgelegt sind.

Dadurch bedingt sind im Bedarfsfall Anschlußeinrichtungen für unterschiedliche Busmedien (Übertragungsmittel) lagermäßig vorzuhalten und zu verwalten, wodurch ein erhöhter technischer und logistischer Aufwand erforderlich ist.

Die Aufgabe der Erfindung besteht darin, eine Anschlußeinrichtung für die Gebäudesystemtechnik zu schaffen, die auf einfache Weise an verschiedenen Übertragungsmedien von Informationsbussen angepaßt werden kann.

Darüber hinaus soll erreicht werden, daß die Anpassung auch für solche Anschlußeinrichtungen möglich ist, die zwar ein einheitliches Übertragungsmedium für die Informationsübertragung benutzen, beispielsweise eine Zweidrahtleitung oder eine Stromversorgungsleitung oder eine Funkübertragung, bei denen aber unterschiedliche Übertragungsarten verwendet werden, beispielsweise Schmalband- oder Breitbandübertragung, oder Vollduplex- oder Halbduplexübertragung, Frequenz- oder Amplitudenmodulation; aber auch verschiedene Telegrammstrukturen, wie sie beispielsweise beim EIB-Bus oder dem BATI-Bus verwendet werden.

Die Aufgabe wird erfindungsgemäß durch die in Anspruch 1 aufgeführten Maßnahmen gelöst. Weiterbildungen zur Erfindung sind in den Unteransprüchen beschrieben.

Die Erfindung geht von der Überlegung aus, daß wesentliche Baugruppen der Anschlußeinrichtung wie die Ein-/Ausgabeeinrichtung, die Einrichtung zum Erzeugen von Telegrammen, die Einrichtung zum Umwandeln eines Analogwertes in einen Digitalwert und umgekehrt und Einrichtungen zum Zuteilen von Quellen- und Zieladressen oder Gruppenadressen unabhängig vom Übertragungsmedium standardisierbar sind, und somit nur noch verschiedene Kopplungsmodule zum Anpassen an das Übertragungsmedium des Informationsbusses benötigt werden, deren Ankopplungsschaltungen an das Übertragungsmedium angepaßt sind und eine Sende- und Empfangseinrichtung enthalten.

Erfindungsgemäß ist eine busmediumunabhängige standardisierte Schnittstelle vorhanden, die einen Mikroprozessor enthalten kann. Diese Schnittstelle ist ergänzbar durch die separaten Kopplungsmodule, die jeweils auf ein Übertragungsmedium abgestimmt sind und der in einer Anschlußeinrichtung enthaltenen Schnittstelle dasjenige Verhalten vermitteln, um über unterschiedliche Übertragungsmedien mit einer oder mehreren Anschlußeinrichtungen zu kommunizieren. Es wird dann nur noch für unterschiedliche Über17ragungsmedien des Informationsbusses, wie Zweidrahtleitungen, Stromversorgungsleitungen, Licht, Ultraschall oder Funk, entsprechende Kopplungsmodule geben, deren Ankopplungsschaltungen auf das jeweilige Übertragungsmedium abgestimmt sind. Die Anschlußeinrichtung kann als Unterputzausführung, Aufputzausführung oder als Einbauausführung ausgebildet sein, wobei das Funktionsteil der Universalschnittstelle für alle Ausführungen baugleich sein kann, wenigstens aber gleiche Konfigurationen für das Einsetzen der Kopplungsmodule besitzen.

Es wird dann zu dem einen standardisierten Funktionsteil wahlweise verwendbare Kopplungsmodule geben. Ist das Übertragungsmedium eine Zweidrahtleitung, so gibt es ein Kopplungsmodul, das als Interface zwischen der Anschlußeinrichtung und der Zweidraht-Busleitung wirkt. Ist das Übertragungsmedium eine Stromversorgungsleitung, so gibt es ein weiteres Kopplungsmodul, das anstelle des Zweidraht-Kopplungsmoduls mit der Anschlußeinrichtung verwendbar ist. Ist das Übertragungsmedium beispielsweise eine Funkstrecke, oder eine optische Strecke, so gibt es noch ein Funk-Kopplungsmodul bzw. ein optisches Kopplungsmodul.

Jedes Kopplungsmodul besitzt eine elektrisch detektierbare Kennung, die von dem standardisierbaren Funktionsteil erkannt wird. Die Kennung kann beispielsweise darin bestehen, daß mit Hilfe einer Identifizierungsleitung, die das standardisierte Funktionsteil mit dem Kopplungsmodul über die Kopplungsmodul-Schnittstelle verbindet und im Kopplungsmodul auf ein busmediumspezifisches Gleichspannungspotential gelegt ist, und das standardisierte Funktionsteil einen Analog-/Digitalwandler enthält, der das Potential der Identifizierungsleitung in einen Digitalwert umwandelt.

Anstelle einer einzigen Identifizierungsleitung können auch mehrere Identifizierungsleitungen vorhanden sein, deren Digitalwerte miteinander kombiniert werden.

Der Mikroprozessor ist für verschiedene Busmedien programmiert und erkennt das jeweilige Kopplungsmodul und paßt den Datenverkehr an das Busmedium an.

Auf der Basis des ISO-Referenzmodells ist in jedem Köpplungsmodul ein busmediumspezifischer "Physical-Layer" enthalten, der im wesentlichen als Signaleinkopplungs- und Signalauskopplungs-Einrichtung darstellbar ist. Jedes Kopplungsmodul mit seinem "Physical-Layer" steht danach in Wechselwirkung zum "Link-Layer", der wieder in Wechselwirkung mit dem "Network-Layer" bzw. dem "Transport-Layer" steht usw. Der "Link-Layer" enthält busmediumabhängige Funktionen, die in Wechselwirkung zu den "Physical-Layern" der Kopplungsmodule stehen und die Anpassung an verschiedene Busmedien ermöglichen.

Dadurch, daß nur ein standardisiertes Funktionsteil vorhanden ist, das im wesentlichen nur die vorstehend genannten busmediumunabhängigen Komponenten enthält und dazu passend noch einige busmediumabhängige Kopplungsmodule Verwendung finden, können mit wenigen Teilen Informationssysteme für verschiedene Busmedien geschaffen werden, wobei eine große fertigungstechnische und logistische Vereinfachung erreicht wird.

Ein Anwendungsbeispiel für die Praxis kann beispielsweise dermaßen aussehen, daß ein Informationsbus teilweise auf Zweileiterbasis und teilweise auf Funk- oder Infrarotbasis betrieben wird. Im ersten Fall sind dann in den standardisierten Funktionsteilen die entsprechenden Zweileiter-Kopplungsmodule und im zweiten Fall die entsprechenden Infrarot-Kopplungsmodule bzw. Funk-Kopplungsmodule zu verwenden.

Für ein gängiges Informationsübertragungssystem, wie den "Europäischen Installations Bus" (EIB), sind Baugruppen der vorstehend beschriebenen Art in hochintegrierter Weise in einer Steuerung, genannt "BCU", enthalten, die mit der Busleitung verbunden sind. An die "BCU" ist noch ein weiterer Schaltungsteil, genannt Busadapter "BA", angeschlossen, der über eine Steuerleitung mit einem externen Gerät verbunden ist.

Der Busadapter kann auch selbst ein Endgerät, beispielsweise ein Schalter, Taster, Dimmer oder ein Anzeigegerät, sein und steckbar mit der "BCU" verbunden werden.

Mit hochintegrierter Technik ist es möglich, die nicht busmediumabhängigen Funktionen hardwaremäßig in ein übliches Gehäuse auf Unterputzbasis einzubauen. Die Verbindung dieser Anschlußeinrichtung mit dem busmediumabhängigen Kopplungsmodul kann über eine Datensteckverbindung erfolgen, mit der ein einfacher Anschluß, aber auch eine einfache Auswechslung erfolgen kann.

Für den Anschluß der Kopplungsmodule an eine Busleitung kann eine von dem Kopplungsmodul getrennte oder trennbare Anschlußvorrichtung benutzt werden, wie sie in der EP 0 436 804 B1 beschrieben ist. Für den Anschluß der Kopplungsmodule an eine Funkstrecke oder an einer optischen Strecke können die Kopplungsmodule Sende- und Empfangselemente aufweisen, oder über entsprechende Kontaktanschlüsse verfügen, um an die entsprechenden Sende- und Empfangselemente angeschlossen werden zu können. Beispielsweise kann als Sende- und/oder Empfangselement das metallische Tragorgan eines üblichen Unterputzgehäuses dienen, das beim Anschließen des Kopplungsmoduls gleichzeitig kontaktiert wird. Optische Sende- und Empfangselemente können direkt in das Kopplungsmodul eingebaut oder in einem dem vorgehend beschriebenen Busadapter entsprechendem Endgerät enthalten sein und über Verbindungen an das Kopplungsmodul angeschlossen sein. Zur Stromversorgung von Anschlußeinheiten, die an einen optischen Übertragungsweg oder an eine Funkstrecke angeschlossen sind, kann eine Stromquelle (Batterie, Akku) verwendet werden, die in den Kopplungsmodulen selbst oder den Busadaptern enthalten sein können, oder es kann in konventioneller Weise ein Netzgerät eingesetzt werden.

Vorteilhaft weist die Anschlußeinrichtng ein in einer Installationsdose montierbares Gehäuse auf, das den standardisierten Funktionsteil der Universalschnittstelle enthält und eine für das Ankopplungsmodul ausgebildete Schnittstelle aufweist.

Ferner weist das Kopplungsmodul eine mit dem Übertragungsmedium koppelbare Schnittstelle auf.

Die Kopplungsmodule sind in ihren Hauptabmessungen baugleich, beispielsweise als Quader, ausgeführt und können in einer in der Außenwand des Gehäuses des standardisierten Funktionsteils vorgesehenen Ausnehmung passend eingesetzt werden.

Für den Anschluß der Schnittstelle des standardisierten Funktionsteiles und des Kopplungsmoduls sind als Stifte und Buchsen ausgebildete Kontaktelemente vorgesehen.

Im folgenden werden unter Bezugnahme auf die Zeichnungen Ausführungsbeispiele der Erfindung näher erläutert.

Es zeigen: ,
- Fig. 1: eine schematische Darstellung einer Anschlußeinrichtung, die ein externes Haushaltsgerät mit einem Informationsbus verbindet,
- Fig. 1a: eine schematische Darstellung einer anderen Anschlußeinrichtung, bei der das Endgerät an dem Funktionsteil angeordnet ist,

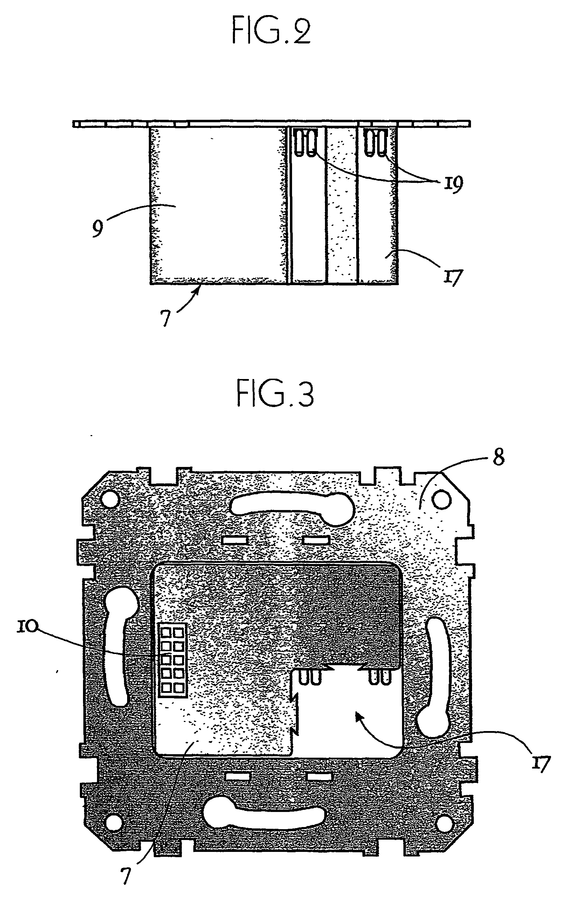

- Fig. 2: die Seitenansicht eines standardisierten Funktionsteiles,
- Fig. 3: eine Frontansicht des standardisierten Funktionsteils,
- Fig. 4: eine Frontansicht des standardisierten Funktionsteils einer Anschlußeinrichtung mit eingesetztem Kopplungsmodul,
- Fig. 5: ein Ein-/Ausgabeteil der Anschlußeinrichtung,
- Fig. 6: die Seitenansicht des Unterteils der Anschlußeinrichtung und
- Fig. 7: die schematische Darstellung der elektrischen Erkennungsschaltung.

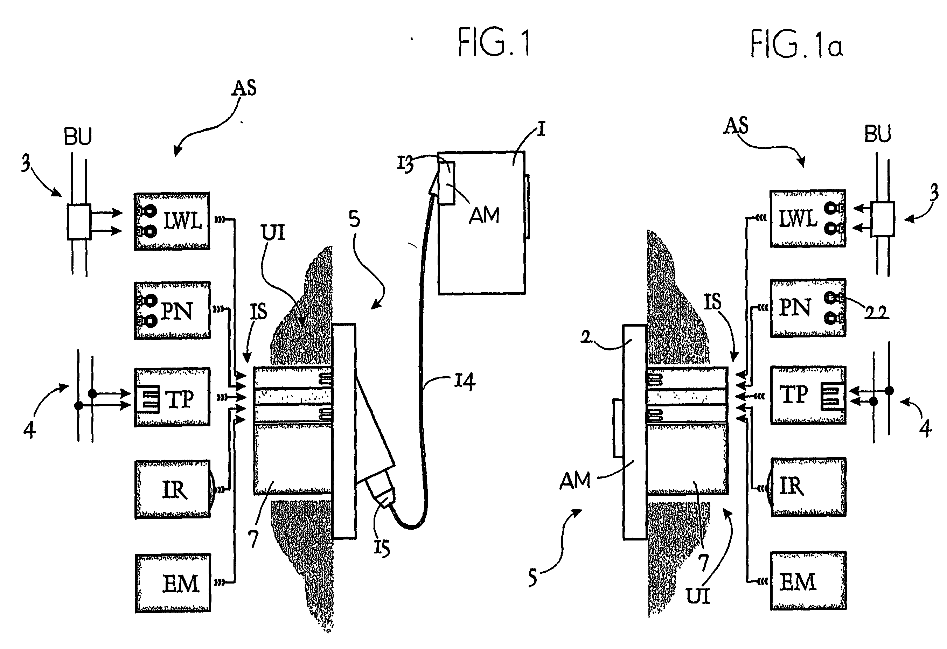

Die Fig. 1 zeigt die schematische Darstellung eines Informationsbussystems für die Gebäudesystemtechnik. Das Informationsübertragungssystem dient zum Übertragen von Informationen zwischen verschiedenen Geräten, wie einem Haushaltsgerät 1, z.B. einer Waschmaschine, die an den Informationsbus angeschlossen sind. Die Informationsübertragung erfolgt zum Schalten, Steuern, Regeln, Messen und Überwachen der Geräte.

In Fig. 1a ist als Gerät 2 ein Schalter dargestellt.

An das Übertragungsmedium 3,4 des Informationsbusses BU sind Anschlußeinrichtungen 5 angeschlossen, welche die Funktion eines Eingabe- oder Ausgabegerätes erfüllen. An die Anschlußeinrichtungen sind die Geräte 1,2, wie Hausgeräte, Melder oder Funktionsgeber, wie Schalter, Taster, Dimmer oder Sensoren, angeschlossen. Die Anschlußeinrichtungen ermöglichen die Kommunikation der Geräte mit dem Informationsbussystem. Für unterschiedliche Geräte 1,2 sind funktionsspezifische Anschlußeinrichtungen vorhanden.

Zur Vereinfachung des Informationsbusses enthält jede Anschlußeinrichtung 5 eine Universalschnittstelle UI und ein Ein-/Ausgabeteil AM. Mit der Universalschnittstelle UI kann ein Signaltelegramm erzeugt und gesendet bzw. empfangen und ausgewertet werden.

Die Universalschnittstelle UI wird mit dem funktionsspezifischen Ein-/Ausgabeteil AM verbunden, das die Anschlußeinrichtung 5 komplettiert und ihr dasjenige Verhalten vermittelt, das für die Kommunikation mit einem bestimmten Gerätetyp erforderlich ist. Das Ein-/Ausgabeteil AM kann mit der Universalschnittstelle UI lösbar verbunden sein oder mit dieser eine komplette Baueinheit bilden. In diesen Fällen ist das Ein-/Ausgabeteil AS dann ein Endgerät 2, das ein Schalter, Taster oder ein Anzeigegerät sein kann. Ferner kann das Ein-/Ausgabeteil AM mit einem externen Endgerät 1 eine Baugruppe bilden.

Als Übertragungsmedium des Informationsbusses kann eine Zweidraht-Busleitung, eine Lichtwellenleitung oder eine Stromversorgungsleitung sowie eine Lichtübertragung, z.B. Infrarotübertragung oder eine Funkübertragung benutzt werden. In Fig. 1 ist mit 4 beispielhaft als Übertragungsmedium eine Zweidraht-Busleitung und mit 3 eine Lichtwellenleitung (zweiadrig) bezeichnet.

Für die Anpassung der Anschlußeinrichtung 5 an unterschiedliche Übertragungsmedien des Informationsbusses besteht die Universalschnittstelle UI aus einem standardisierten Funktionsteil 7, welches die busmediumunabhängigen Komponenten und die Software für alle Kopplungsmodule AS enthält, und mehreren Kopplungsmodulen AS, die jeweils die busmediumabhängigen Komponenten enthalten, die wahlweise über eine Kopplungsmodul-Schnittstelle IS mit dem standardisierten Funktionsteil 7 verbunden oder verbindbar sind.

Wie Fig. 1 zeigt, sind mehrere Kopplungsmodule AS verfügbar, nämlich ein Kopplungsmodul mit der Bezeichnung LWL für eine Lichtwellenbusleitung 3, ein Kopplungsmodul PN für eine Stromleitung als Busleitung, ein Kopplungsmodul TP für eine Zweidrahtbusleitung 4, ein Kopplungsmodul IR für Infrarotübertragung und ein Kopplungsmodul EM für Funkübertragung. Es ist also für die Kopplungsmodule LWL, PN und TP eine leitungsgebundene Übertragung und für die beiden letztgenannten Kopplungsmodule IR,EM eine leitungslose Bus-Übertragung vorgesehen.

Die Universalschnittstelle UI ist für den Einbau in einer Wanddose ausgebildet und besitzt für diesen Zweck ein metallisches Tragorgan 8 in Form einer Platte oder eines Ringes, an dem ein Unterputzgehäuse 9 befestigt ist, welches das standardisierte Funktionsteil 7 enthält. An der Stirnseite dieses Gehäuses 9 ist ein Stecker 10 für den elektrischen Anschluß des funktionsbestimmenden Ein-/Ausgabeteiles 2 über korrespondierende Kontaktelemente 11,12 vorgesehen.

In Fig. 1 ist der funktionsspezifische Ein/-Ausgabeteil 13 in dem externen Endgerät 1 eingebaut und über eine Steuerleitung 14 mit Steckadapter 15 mit der Universalschnittstelle UI verbunden. In Fig. 1a ist der funktionsspezifische Ein-/Ausgabeteil 2 direkt mit der Universalschnittstelle UI verbunden und bildet gewissermaßen ein Endgerät. Es kann sich dabei um einen Schalter, Taster, Dimmer, Sensor oder um eine Anzeigeeinheit handeln, mit der beispielsweise der Betriebszustand des externen Endgerätes angezeigt wird.

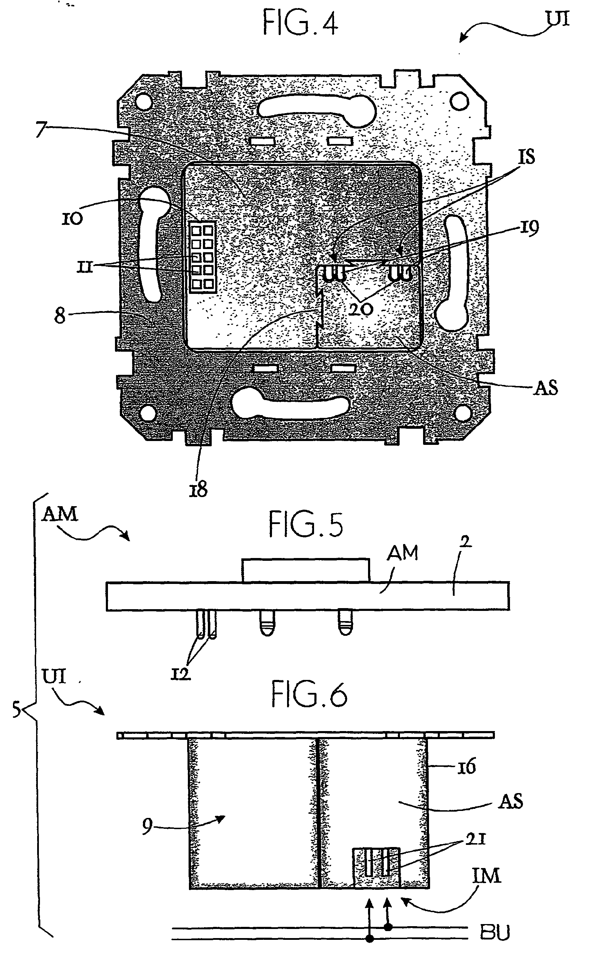

Die Schaltungseinheiten für die Kopplungsmodule AS sind in einander gleichen Gehäusen 16 mit gleichen mechanischen Hauptabmessungen eingebaut. In der Außenwand des standardisierten Funktionsteiles 7 ist eine Aufnahme 17 für ein Gehäuse 16 eines Kopplungsmoduls AS vorhanden. Die Außenwände der Gehäuseteile haben mechanische Führungen 18, beispielsweise Schwalbenschwanzführungen, so daß sich ein Kopplungsmodul AS mit seinen Führungen in die Führungen der Aufnahme einsetzen läßt. Die elektrische Verbindung des Kopplungsmodules AS mit dem standardisierten Funktionsteil 7 der Universalschnittstelle UI erfolgt über die Kopplungsmodul-Schnittstelle IS, für die als Stifte 19 und Buchsen 20 ausgebildete Kontaktelemente vorhanden sind. Die Kontaktverbindung erfolgt automatisch beim Einsetzen eines Kopplungsmodules AS in die Aufnahme, so daß durch das Einsetzen eines Kopplungsmodules AS das standardisierte Funktionsteil 7 zu einer mechanisch und elektrisch vervollständigten Universalschnittstelle UI ergänzt ist (Fig. 4,Fig. 6).

Für die leitungsgebundenen Kopplungsmodule LWL, PN und TP ist eine zum Koppeln mit dem jeweiligen Busmedium ausgebildete Schnittstelle IM vorgesehen. Die Kopplung über diese Schnittstelle IM erfolgt über als Stifte und Buchsen ausgebildete Kontaktelemente 21,22.

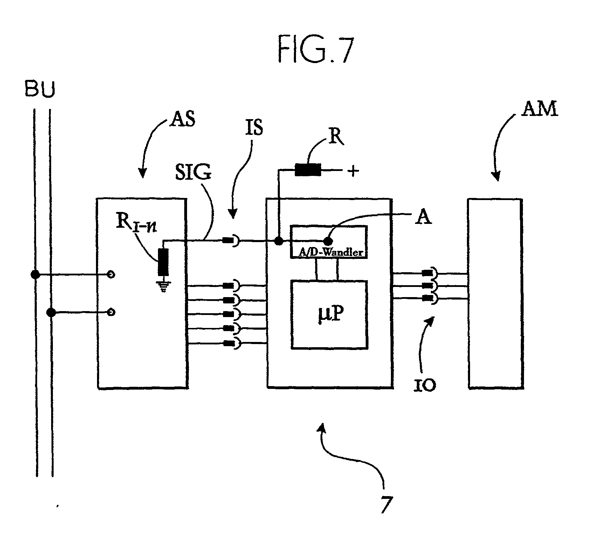

Die elektrisch detektierbare Kennung (Fig. 7) enthält in jedem Kopplungsmodul AS einen speziellen Typwiderstand R₁₋ₙ, der Bestandteil eines zwischen Pluspotential und Massepotential geschalteten Spannungsteiler R₁₋ₙ,R ist und dessen Abgriff A an die Identifizierungsleitung SIG gelegt ist. Somit wird die Identifizierungsleitung SIG bei jedem Kopplungsmodul AS (LWL,TP,PN,IR,EM) auf ein ganz bestimmtes Gleichspannungspotential gelegt, das durch das Verhältnis der Widerstände R₁₋ₙᵣ R des Spannungsteilers bestimmt ist. Für die Erkennung des jeweiligen Kopplungmoduls AS wird ein A/D-Wandler oder ein Komparator benutzt. Der Mikroprozessor µP setzt den Wert des Gleichspannungspotentials an der Identifizierungsleitung SIG in einen Digitalwert um und erkennt auf diese Weise das jeweils über die Kopplungsmodul-Schnittstelle IS angeschlossene Kopplungsmodul AS. Wenn der Mikroprozessor µP das Kopplungsmodul AS erkannt hat, wird die Universalschnittstelle UI zum Datenverkehr über das Busmedium angepaßt.

In die nicht leitungsgebundenen Kopplungsmodule IR und EM sind jeweils Sende- und Empfangsteile eingebaut, beispielsweise optoelektrische Wandler oder Funksender und -empfänger (Sendermodulator und Empfängerdemodulator).

Als Antenne für ein Funkkopplungsmodul EM eignet sich das metallische Tragorgan 8 der Universalschnittstelle UI, welches mit einem Sendeausgang und einem Empfangseingang des Kopplungsmoduls EM verbunden ist. Für die Stromversorgung der leitungsunabhängigen Universalschnittstellen UI ist eine Stromquelle in die Kopplungsmodule IR und EM eingebaut oder diese Universalschnittstellen UI werden von einer separaten Stromquelle gespeist.

## Patentansprüche

1. Anschlußeinrichtung für die Gebäudesystemtechnik zum Anschließen von Geräten (1,2) an einen Informationsbus (BU) mit einer busseitigen Schnittstelle (UI), die Informationen senden und empfangen kann,
**dadurch gekennzeichnet,**
**daß** die Schnittstelle (UI) ein Funktionsteil (7) und ein auswechselbares Kopplungsmodul (AS) zur Anpassung an das jeweilige Busmedium (3,4) oder die jeweilige Übertragungsart des Informationsbusses (BU) aufweist.

2. Anschlußeinrichtung nach Anspruch 1, **dadurch gekennzeichnet, daß** das Funktionsteil (7) und die Kopplungsmodule (AS) in räumlich trennbaren Gehäusen (9,16) enthalten sind.

3. Anschlußeinrichtung nach Anspruch 1 oder 2, **dadurch gekennzeichnet, daß** mehrere Kopplungsmodule (AS) mit gleichen Baumaßen und gleichen schnittstellenseitigen Anschlußmaßen vorgesehen sind.

4. Anschlußeinrichtung nach einem der Ansprüche 1 bis 3, **dadurch gekennzeichnet, daß** das Kopplungsmodul (AS) in einer Aufnahme (17) eines mindestens einen Teil der Schnittstelle enthaltenden Funktionsteils (7) untergebracht ist.

5. Anschlußeinrichtung nach den Ansprüchen 2 und 4, **dadurch gekennzeichnet, daß** die Aufnahme (17) in einer Außenwand des Gehäuses (9) des Funktionsteils (7) angebracht ist.

6. Anschlußeinrichtung nach einem der Ansprüche 1 bis 5, **dadurch gekennzeichnet, daß** jedes Kopplungsmodul (AS) eine busmediumabhängige Signaleinkopplungs- und Signalauskopplungs-Einrichtung enthält.

7. Anschlußeinrichtung nach einem der Ansprüche 1 bis 6, **dadurch gekennzeichnet, daß** jedes Kopplungsmodul (AS) eine busmediumabhängige elektrisch detektierbare Kennung besitzt, welche von der Funktionseinheit (7) erkannt wird.

8. Anschlußeinrichtung nach einem der Ansprüche 1 bis 7, **dadurch gekennzeichnet, daß** das Kopplungsmodul (AS) eine mit dem Übertragungsmedium koppelbare Kopplungsmodul-Schnittstelle (IM) enthält.

9. Anschlußeinrichtung nach einem der Ansprüche 1 bis 8, **dadurch gekennzeichnet, daß** für die Kopplungsmodul-Schnittstelle (IS) als Stifte und Buchsen ausgebildete Kontaktelemente (19,20) vorgesehen sind.

10. Anschlußeinrichtung nach einem der Ansprüche 1 bis 9, **dadurch gekennzeichnet, daß** für den Anschluß eines Kopplungsmoduls- (AS) an ein Übertragungsmedium (4) als Stifte und Buchsen ausgebildete Kontaktelemente (21,22) vorgesehen sind.

11. Anschlußeinrichtung nach einem der Ansprüche 1 bis 10, **dadurch gekennzeichnet, daß** das Kopplungsmodul (AS) eine für das jeweilige Übertragungsmedium abgestimmte Sende- und Empfangseinrichtung enthält.

12. Anschlußeinrichtung nach einem der Ansprüche 1 bis 11, **dadurch gekennzeichnet, daß** das Kopplungsmodul (AS) einen Sendemodulator und einen Empfangsdemodulator enthält.

13. Anschlußeinrichtung nach einem der Ansprüche 1 bis 12, **dadurch gekennzeichnet, daß** ein optisches Kopplungsmodul (AS) wenigstens einen optoelektrischen Wandler enthält.

14. Anschlußeinrichtung nach einem der Ansprüche 1 bis 11, **dadurch gekennzeichnet, daß** ein Funkkopplungsmodul (AS) eine Sende- und Empfangsantenne enthält.

15. Anschlußeinrichtung nach Anspruch 14, **dadurch gekennzeichnet, daß** das metallische Tragorgan (8) einer Unterputz-Anschlußeinrichtung als Antenne dient.

16. Anschlußeinrichtung nach Anspruch 13 oder 14, **dadurch gekennzeichnet, daß** das Kopplungsmodul (AS) eine Stromquelle enthält.

17. Anschlußeinrichtung nach Anspruch 1 oder 2, **dadurch gekennzeichnet, daß** das standardisierte Funktionsteil (7) eine Einrichtung zum Erzeugen von Telegrammen, einen Digital/Analog-Wandler, und eine Adressierungseinrichtung enthält.

## Claims

1. A connection device for in-house system technology, provided for the connecting of apparatus (1,2) to an information bus (BU), comprising a bus-end interface (UI) arranged to transmit and receive information,
**characterized in**
**that** the interface (IU) comprises a functional unit (7) and an exchangeable coupling module (AS) for adaptation to the respective bus medium (3,4) or the respective type of transmission of the information bus (BU).

2. The connection device according to claim 1, **characterized in that** the functional unit (7) and the coupling modules (AS) are accommodated in spatially separable housings (9,16).

3. The connection device according to claim 1 or 2, **characterized by** the provision of a plurality of coupling modules (AS) having identical constructional sizes and identical connection sizes on the interface side.

4. The connection device according to any one of claims 1 to 3, **characterized in that** the coupling module (AS) is accommodated in a receiving portion (17) of a functional unit (7) including at least a part of the interface.

5. The connection device according to claims 2 and 4, **characterized in that** the receiving portion (17) is arranged in an outer wall of the housing (9) of the functional unit (7).

6. The connection device according to any one of claims 1 to 5, **characterized in that** each coupling module (AS) includes a bus-medium-dependent signal-coupling and signal-decoupling device.

7. The connection device according to any one of claims 1 to 6, **characterized in that** each coupling module (AS) is provided with a bus-medium-dependent electrically detectable identification code which is detected by the functional unit (7).

8. The connection device according to any one of claims 1 to 7, **characterized in that** the coupling module (AS) includes a coupling-module interface (IM) to be coupled to the transmission medium.

9. The connection device according to any one of claims 1 to 8, **characterized in that** contact elements (19,20) formed as pins and sockets are provided for the coupling-module interface (IS).

10. The connection device according to any one of claims 1 to 9, **characterized in that** contact elements (21,22) formed as pins and sockets are provided for the connection of a coupling module (AS) to a transmission medium (4).

11. The connection device according to any one of claims 1 to 10, **characterized in that** the coupling module (AS) includes a transmitter and receiver device adjusted to the respective transmission medium.

12. The connection device according to any one of claims 1 to 11, **characterized in that** the coupling module (AS) includes a transmission modulator and a reception demodulator.

13. The connection device according to any one of claims 1 to 12, **characterized in that** an optical coupling module (AS) includes at least one optoelectric converter.

14. The connection device according to any one of claims 1 to 11, **characterized in that** a radio coupling module (AS) includes a transmission and reception antenna.

15. The connection device according to claim 14, **characterized in that** the metallic support element (8) of a concealed connection device is used as an antenna.

16. The connection device according to claim 13 or 14, **characterized in that** the coupling module (AS) includes a power source.

17. The connection device according to claim 1 or 2, **characterized in that** the standardized functional unit (7) includes a device for generating telegrams, a digital/analog converter and an addressing device.

## Revendications

1. Dispositif de raccordement pour réseau domestique en vue du raccordement d'appareils (1, 2) à un bus d'information (BU), comportant une interface (UI) côté bus, apte à émettre et à recevoir des informations,
**caractérisé en ce que**
l'interface (UI) présente une partie fonctionnelle (7) et un module de couplage (AS) interchangeable pour adaptation au milieu de bus (3, 4) respectif ou au mode de transmission respectif du bus d'information (BU).

2. Dispositif de raccordement selon la revendication 1, **caractérisé en ce que** la partie fonctionnelle (7) et les modules de couplage (AS) sont contenus dans des boîtiers (9, 16) séparables dans l'espace.

3. Dispositif de raccordement selon la revendication 1 ou 2, **caractérisé en ce que** sont prévus plusieurs modules de couplage (AS) ayant des cotes d'encombrement identiques et des cotes de raccordement côté interface identiques.

4. Dispositif de raccordement selon l'une des revendications 1 à 3, **caractérisé en ce que** le module de couplage (AS) est logé dans un réceptacle (17) d'une partie fonctionnelle (7) contenant au moins une partie de l'interface.

5. Dispositif de raccordement selon les revendications 2 et 4, **caractérisé en ce que** le réceptacle (17) est disposé dans une paroi extérieure du boîtier (9) de la partie fonctionnelle (7).

6. Dispositif de raccordement selon l'une des revendications 1 à 5, **caractérisé en ce que** chaque module de couplage (AS) contient un système de couplage et découplage de signaux, dépendant du milieu de bus.

7. Dispositif de raccordement selon l'une des revendications 1 à 6, **caractérisé en ce que** chaque module de couplage (AS) possède un code d'identification détectable électriquement et dépendant du milieu de bus, qui est reconnu par l'unité fonctionnelle (7).

8. Dispositif de raccordement selon l'une des revendications 1 à 7, **caractérisé en ce que** le module de couplage (AS) comporte une interface (IM) de module de couplage pouvant être couplée au milieu de transmission.

9. Dispositif de raccordement selon l'une des revendications 1 à 8, **caractérisé en ce que**, pour l'interface (IS) du module de couplage sont prévus des éléments de contact (19, 20) réalisés en tant que fiches et douilles.

10. Dispositif de raccordement selon l'une des revendications 1 à 9, **caractérisé en ce que**, pour le raccordement d'un module de couplage (AS) à un milieu de transmission (4), sont prévus des éléments de contact (21, 22) réalisés en tant que fiches et douilles.

11. Dispositif de raccordement selon l'une des revendications 1 à 10, **caractérisé en ce que** le module de couplage (AS) contient un système émetteur et récepteur réglé pour le milieu de transmission respectif.

12. Dispositif de raccordement selon l'une des revendications 1 à 11, **caractérisé en ce que** le module de couplage (AS) contient un modulateur émetteur et un démodulateur récepteur.

13. Dispositif de raccordement selon l'une des revendications 1 à 12, **caractérisé en ce qu'**un module de couplage (AS) optique contient au moins un convertisseur optoélectrique.

14. Dispositif de raccordement selon l'une des revendications 1 à 11, **caractérisé en ce qu'**un module de couplage radio (AS) comporte une antenne émettrice et réceptrice.

15. Dispositif de raccordement selon la revendication 14, **caractérisé en ce que** l'organe support métallique (8) d'un système de raccordement encastré sert d'antenne.

16. Dispositif de raccordement selon la revendication 13 ou 14, **caractérisé en ce que** le module de couplage (AS) contient une source de courant.

17. Dispositif de raccordement selon la revendication 1 ou 2, **caractérisé en ce que** la partie fonctionnelle (7) normalisée comporte un système pour générer des télégrammes, un convertisseur numérique/analogique et un dispositif d'adressage.
